# EUROPÄISCHE PATENTSCHRIFT

(11) **EP 3 908 812 B1**
(45) Veröffentlichungstag und Bekanntmachung des Hinweises auf die Patenterteilung: **19.02.2025**
(21) Anmeldenummer: 20723107.7
(22) Anmeldetag: 29.04.2020
(51) Int. Cl.: G01G 17/00

(54) **VORRICHTUNG UND VERFAHREN ZUM WIEGEN IN EINEM TRÄGER GENESTETER PHARMAZEUTISCHER BEHÄLTNISSE**
APPARATUS AND METHOD FOR WEIGHING PHARMACEUTICAL CONTAINERS NESTED IN A CARRIER
APPAREIL ET PROCÉDÉ POUR PESER DES CONTENANTS PHARMACEUTIQUES LOGÉS DANS UN SUPPORT

(30) Priorität: 01.08.2019 DE 102019211568
(43) Veröffentlichungstag der Anmeldung: 17.11.2021
(73) Patentinhaber: Syntegon Technology GmbH, 71332 Waiblingen (DE)
(72) Erfinder: KRAUSS, Ulrich, 74532 Ilshofen (DE); BUSCH, Olaf, 74564 Crailsheim-Jagstheim (DE)
(74) Vertreter: Novagraaf Group
(86) Internationale Anmeldenummer: PCT/EP2020/061921
(87) Internationale Veröffentlichungsnummer: WO 2021/018428

(56) Entgegenhaltungen:
- EP-A1- 2 207 019
- WO-A1-2011/000606
- WO-A2-2020/240601
- DE-A1- 102017 207 255
- US-A1- 2013 174 520

## Beschreibung

### Stand der Technik

Die vorliegende Erfindung betrifft eine Vorrichtung sowie ein Verfahren zum Wiegen in einem Träger genesteter pharmazeutischer Behältnisse nach der Gattung der unabhängigen Ansprüche.

Bei der Herstellung pharmazeutischer Produkte in Massenproduktion tritt häufig das Problem auf, dass entsprechende pharmazeutische Behälter oder Gefäße, z.B. Spritzen, Ampullen, Karpulen, Vials oder dergleichen, in steriler Form bereitgestellt und befüllt sowie in ihrer Befüllmenge überprüft werden müssen.

Eine Vorrichtung zum Wiegen in einem Träger genesteter pharmateutischer Behälter ist auch aus der EP 2207019 A1 bekannt. Die Merkmale des Oberbegriffs der vorliegenden unabhängigen Ansprüche werden hier offenbart.

Eine weitere gattungsgemäße Vorrichtung zum Wiegen in einem Träger genesteter pharmazeutischer Behälter ist beispielsweise aus der DE 102016207600 A1 bekannt. Hierbei werden eine Mehrzahl der genesteten Behälter im Wesentlichen gleichzeitig über eine Mehrzahl von voneinander unabhängiger Wiegezellen einer Wiegevorrichtung einzeln individuell oder gruppenweise individuell gewogen. Weitere gattungsgemäße Vorrichtungen in sind beispielsweise aus EP 2949353 B1, DE 102005014116 B4, WO 2020/240601 A2 oder WO 2018/019985 bekannt. Zum Wiegen werden jeweils die Behältnisse relativ zum Nest bewegt zur Freistellung auf der Wiegezelle. Hierbei befinden sich die Behältnisse nicht mehr oder nur noch teilweise in dem schützenden Nest.

### Offenbarung der Erfindung

Die erfindungsgemäße Vorrichtung und das erfindungsgemäße Verfahren zum Wiegen in einem Träger genesteter pharmazeutischer Behältnisse mit den Merkmalen der unabhängigen Ansprüche weisen demgegenüber den Vorteil auf, dass ohne Erhöhung des apparativen Aufwandes auf einfache und zuverlässige Weise pharmazeutische Behälter gewogen und in ihrem Gewicht individuell und einfach erfasst werden können, ohne dass sie aus dem Nest genommen werden müssen. Dies wird erfindungsgemäß mit den Merkmalen der unabhängigen Ansprüche dadurch erreicht, dass eine Vorrichtung und ein Verfahren zum Wiegen in einem Träger genesteter pharmazeutischer Behälter geschaffen werden, wobei eine Mehrzahl der genesteten Behälter im Träger bzw. Nest verbleiben können, indem eine Aufnahme für den Träger mit einer Wiegestation, insbesondere mit zumindest einer Wiegezelle, zur Gewichtserfassung verbunden ist. Gerade die Entnahme der Behältnisse und das Handling mit automatisierten Greifern ist ein Prozess, der gelegentlich einen manuellen Eingriff erfordern kann. Mit der erfindungsgemäßen Lösung können solche manuellen Eingriffsmöglichkeiten weiter reduziert werden. Denn erfindungsgemäß müssen die Behältnisse zum Wiegen nicht mehr aus dem Träger, Nest bzw. Tray entnommen werden, sondern können über die gesamte Bearbeitung in ihrer schützenden Umverpackung, dem Träger, verbleiben. Dank der erfindungsgemäßen Lösung vereinfachen sich die Prozesse. Weiterhin kann eine zugehörige Füllmaschine mit einer Füllgewichtskontrolle sehr viel einfacher aufgebaut werden, da keine Ausheber für die Behältnisse und keine Behältnisgreifer mehr erforderlich sind. Störanfällige Prozesse wie beispielsweise das Handling einzelner Behältnisse ist nicht mehr erforderlich. Weiterhin zeichnet sich die erfindungsgemäße Vorrichtung durch einen geringen Platzbedarf aus, was gerade in den Reinräumen der Pharmaindustrie einen wesentlichen Kostenvorteil darstellt. Ein weiterer Vorteil des beschriebenen Systems besteht darin, dass die Gefahr von Packmittelbeschädigungen vermieden wird, weil die Behältnisse nicht aus der schützenden Umverpackung, dem Träger, entnommen werden müssen. So wird die Gefahr von Glasbruch beim Entnehmen der Behältnisse sowohl von Pharmaherstellern als auch von den jeweiligen Genehmigungsbehörden als kritisch angesehen, was erfindungsgemäß vermieden werden kann.

Die Wiegestation der vorliegenden Erfindung umfasst zumindest zwei Wiegezellen, die zumindest über einen Stößel mit der Aufnahme verbunden sind, vorzugsweise an gegenüberliegenden Seiten der Aufnahme. Dadurch können Wiegezellen mit besserer Wiegegenauigkeit eingesetzt werden, obwohl der Wiegebereich für die gesamte zu wiegende Masse zu klein wäre. Die Genauigkeit der Gewichtserfassung kann dadurch verbessert werden.

In einer zweckmäßigen Weiterbildung verbleibt beim Wiegen das Behältnis in dem Träger. Dadurch können Beschädigungen, wie sie bei der Entnahme auftreten können, vermieden werden.

In einer zweckmäßigen Weiterbildung ist zumindest eine Füllstation vorgesehen, die zumindest ein Behältnis, insbesondere nur ein einziges Behältnis, befüllt, wenn sich das Behältnis in dem Träger befindet und der Träger in der Aufnahme angeordnet ist. Damit lässt sich eine Inprozess-Kontrolle des Füllgewichts realisieren, wobei sämtliche abgefüllten Behältnisse nacheinander auf korrektes Gewicht kontrolliert werden können. Es ist lediglich eine Wiegestation notwendig, um aus Tara-Gewicht und Brutto-Gewicht das Füllgewicht eines abgefüllten Behältnisses zu ermitteln.

Hierzu wird besonders zweckmäßig vorgesehen, dass die Wiegestation ein Gewicht vor dem Befüllen des Behältnisses und ein Gewicht nach dem Befüllen des Behältnisses ermittelt und/oder ein Gewicht nach dem Befüllen eines weiteren Behältnisses ermittelt. So bildet das erfasste Brutto-Gewicht nach dem Abfüllen eines Behältnisses das Tara-Gewicht des nächsten abzufüllenden Behältnisses, ohne dass hierfür ein zusätzlicher Messschritt notwendig wäre. Dadurch vereinfacht und beschleunigt sich der Vorgang der Gewichtsermittlung.

In einer zweckmäßigen Weiterbildung umfasst die Füllstation zumindest einen Arm, insbesondere einen Roboterarm, der zumindest eine Füllnadel zum Befüllen eines Behältnisses bewegt. Dadurch erhöht sich die Flexibilität bei der Wahl der Füllstellen. Außerdem kann ein Arm, insbesondere Roboterarm, besonders günstig so programmiert werden, dass geringe laminare Luftströmungen beim Bewegen von einer zur nächsten Füllstelle erzeugt werden. Dies reduziert die Partikelbewegungen und ist daher aus pharmazeutischer Sicht besonders bevorzugt.

Weitere zweckmäßige Weiterbildungen ergeben sich aus weiteren abhängigen Ansprüchen und aus der Beschreibung.

### Kurzbeschreibung der Figuren

Unter Bezugnahme auf die beigefügten Figuren werden Ausführungsformen der Erfindung im Detail beschrieben.
- Figur 1: zeigt in einer perspektivischen Seitenansicht eine Ausführungsform der erfindungsgemäßen Vorrichtung zum Wiegen in einem Träger genesteter pharmazeutischer Behältnisse.
- Figur 2: zeigt einen Schnitt durch die Vorrichtung nach Figur 1.

### Bevorzugte Ausführungsformen der Erfindung

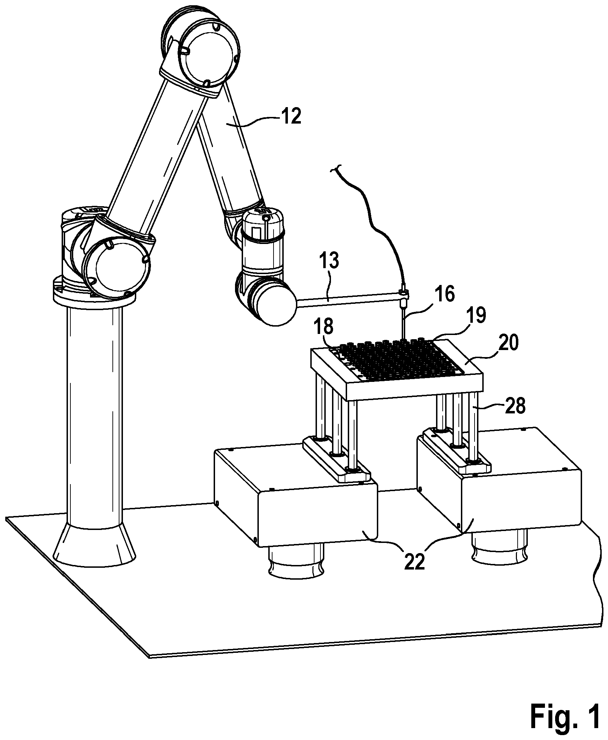

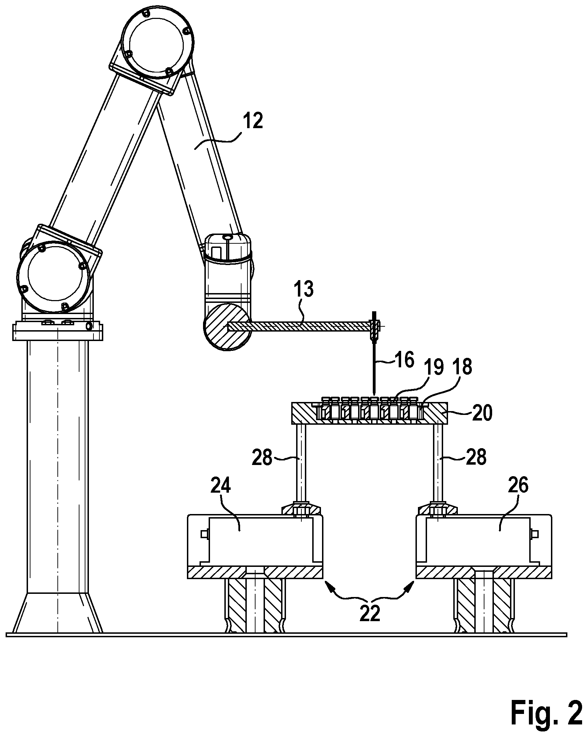

Nachfolgend werden unter Bezugnahme auf die Figuren 1 und 2 Ausführungsbeispiele der Erfindung im Detail beschrieben.

Figur 1 zeigt in perspektivischer Seitenansicht eine Ausführungsform der Vorrichtung 10 zum Befüllen von in einem Träger 18 genesteten pharmazeutischen Behältnissen 19 unter Verwendung einer Ausführungsform der erfindungsgemäßen Vorrichtung 22 zum Wiegen. Im Folgenden wird die Vorrichtung 10 zum Befüllen auch als Befüllstation 10 bezeichnet. Entsprechend wird die Vorrichtung 22 zum Wiegen auch als Wiegestation 22 bezeichnet.

Die Befüllstation 10 gemäß der vorliegenden Erfindung weist neben der Wiegestation 22 eine Befülleinheit 15 auf, die zumindest eine Füllnadel 16 und einen Schlauch 14 zum Zuführen des abzufüllenden Mediums wie beispielsweise Pharmazeutika umfasst.

Mittels eines Roboterarms 12 kann die Befülleinheit 15 bzw. Füllnadel 16 in Bezug auf den Träger 18 und die darin enthaltenen pharmazeutischen Behältnisse 19 gehoben und gesenkt werden.

Der in Figur 1 dargestellte Träger 18 zur Aufnahme der pharmazeutischen Behältnisse 19 besteht aus einem Trägerkörper. Es sind den Trägerkörper vollkommen durchmessende Ausnehmungen ausgebildet, in welchen die pharmazeutischen Behältnisse 19 die Ausnehmungen vollkommen durchdringend aufnehmbar sind, wobei sich die pharmazeutischen Behältnisse 19 durch ihre Formgebung an einem jeweiligen Sitz an der Oberseite des Trägerkörpers abstützen, so dass sie nach unten nicht durch den Träger 18 fallen.

Der Träger 18 mit den Behältnissen 19 wird in einer Aufnahme 20 angeordnet. Die Aufnahme 20 ist beispielsweise als Halterahmen ausgebildet und umgibt den Träger 18, insbesondere zur formschlüssigen Aufnahme und Halterung. Die Aufnahme 20 weist hierzu eine entsprechende Ausnehmung auf, damit der Träger 18 von oben die Aufnahme 20 gebracht und abgelegt werden kann. Der Träger 18 ist zumindest an einer, vorzugsweise an zwei Seiten etwas verbreitert ausgebildet. Die Aufnahme 20 ist mit einer Wiegestation 22 verbunden. Dies erfolgt beispielsweise über zumindest einen Stößel 28, der mit zumindest einer Wiegezelle 24, 26 der Wiegestation 22 zum Zwecke der Gewichtserfassung zusammenwirkt. Im Ausführungsbeispiel umfasst die Wiegestation 22 zwei Wiegezellen 24. Hierbei stehen die beiden Außenseiten der Aufnahme 20, die den Träger 18 umschließen, jeweils mit den beiden Wiegezellen 24, 26 über entsprechende Stößel 28 in Verbindung. Mehrere Wiegezellen 24, 26 werden verwendet, um Wiegezellen 24, 26 mit besserer Wiegegenauigkeit einsetzen zu können, obwohl der Wiegebereich für die gesamte zu wiegende Masse zu klein wäre. Für die Verbindung einer Seite der Aufnahme 20 mit je einer Wiegezelle 24, 26 ist zumindest ein Stößel 28 vorgesehen. Vorzugsweise sind für die Verbindung einer Seite der Aufnahme 20 mit je einer Wiegezelle 24, 26 mehrere Stößel 28 vorgesehen, im Ausführungsbeispiel sind es beispielhaft jeweils drei Stößel 28.

Diese und weitere Merkmale und Eigenschaften der vorliegenden Erfindung werden an Hand der folgenden Darlegungen weiter erläutert:
Der komplette Träger 18 mit darin platzierten Behältnissen 19 wird mittels einer geeigneten Transportvorrichtung auf der Aufnahme 20 platziert. Die Transportvorrichtung löst sich von dem Träger 18, so dass der Träger 18 mit seinem Gewicht und dem der darin angeordneten Behältnisse 19 auf die Aufnahme 20 und damit auf die Wiegestation 22 einwirkt.

Dort findet dann der nächste Bearbeitungsschritt statt. Wie bereits beschrieben ist die Aufnahme 20 zur Gewichtserfassung mit der Wiegestation 22 bzw. den zugehörigen Wiegezellen 24, 26 verbunden. Zunächst erfasst die Wiegestation 22 das Tara-Gewicht. Das Tara-Gewicht umfasst somit also das Gewicht des Trägers 18 sowie das Gewicht sämtlicher im Träger 18 befindlicher Behältnisse 19, die alle vor dem ersten Befüllvorgang leer sind.

Anschließend wird ein einzelnes Behältnis 19 beispielsweise mit einem Medikament befüllt. Daraufhin ermittelt die Wiegestation 22 das Brutto-Gewicht. Das Brutto-Gewicht umfasst somit also das Gewicht des Trägers 18 sowie das Gewicht sämtlicher im Träger 18 befindlicher Behältnisse 19, von denen nach einem ersten Füllvorgang eines befüllt ist.

Die Differenz aus Brutto-Gewicht und Tara-Gewicht ergibt das Füllgewicht. Das ermittelte Brutto-Gewicht (aus der vorangegangenen Befüllung) kann als Tara-Gewicht für die nachfolgende Befüllung verwendet werden. Daran schließt sich die nachfolgende Befüllung eines weiteren Behältnisses 19 an. Wiederum wird das Brutto-Gewicht nach der nachfolgenden Befüllung des weiteren Behältnisses 19 ermittelt. Die Differenz aus dem aktuellen Brutto-Gewicht und dem vorhergehenden Brutto-Gewicht ergibt das Füllgewicht der Befüllung des weiteren Behältnisses 19.

Das beschriebene Vorgehen wiederholt sich für jedes weitere zu befüllende Behältnis 19, bis alle Behältnisse 19 des Trägers 18 gefüllt und gewogen sind. Im Normalfall werden alle Behältnisse 19 gefüllt, es kann jedoch auch vorkommen, dass nicht alle Behältnisse 19 gefüllt werden.

Hervorzuheben ist, dass die Behältnisse 19 auch beim Wiegen immer im Träger 18 verbleiben, also nicht freigestellt, angehoben etc. werden. Das jeweils ermittelte Füllgewicht wird überprüft, ob es mit einem Soll-Füllgewicht übereinstimmt. Bei nicht tolerablen Abweichungen werden Gegenmaßnahmen eingeleitet wie beispielsweise das Ausschleusen nicht korrekt befüllter Behältnisse 19 und/oder die Abgabe entsprechender Warnhinweise, beispielsweise auch zur Überprüfung der Füllstation 10. Auch kann bei einer zu geringen Befüllung die fehlende Füllmenge nachdosiert werden, anstelle das Besteckbehältnis 19 aus zu schleusen. Es ist auch möglich, damit eine Wiege-Dosier-Funktion zu realisieren. Bei dieser Funktion wird die Füllmenge durch das Wiegeergebnis bestimmt. Beim Erreichen des Soll-Gewichts wird die Füllung beendet.

Die Befüllung der Behältnisse 19 in dem Träger 18 kann beispielsweise mit einem entsprechend programmierten Arm stattfinden, beispielsweise der Roboterarm 12. Dieser ist so gestaltet bzw. der Bewegungsweg so programmiert, dass die laminare Luftströmung möglichst wenig gestört wird. Dies erhöht die Sicherheit der Anordnung, indem weniger Partikel bewegt werden.

Das Verschließen der befüllten Behältnisse 19 erfolgt erst in einem nachfolgenden Schritt, da das Gewicht der Verschlüsse das Wiegeergebnis auf der Wiegestation 22 verfälschen könnte. Somit wird der Träger 18 mit befüllten Behältnissen 19 aus der Aufnahme 20 entnommen und zu einer Verschließstation gebracht. Auf der Verschließstation erfolgt das Verschließen der Behältnisse 19. Alternativ ist es auch möglich, direkt nach dem Befüllen das jeweilige Behältnis 19 zu verschließen. Dann muss lediglich ein neuer Tara-Wert ermittelt werden, bevor die nächste Füllung stattfindet.

Mit dem beschriebenen System kann eine Füllmaschine mit Füllgewichtskontrolle im laufenden Prozess (IPK) sehr viel einfacher aufgebaut werden, da keine Ausheber und Behältnisgreifer mehr erforderlich sind. Störanfällige Prozesse wie beispielsweise das Handling einzelner Behältnisse 19 können unterbleiben. Dies wird erreicht, indem man den Träger 18 und die weiteren Behältnisse 19 zum Tara- und Brutto-Gewicht des abzufüllenden Behältnisses 19 dazu zählt.

Das beschriebene System eignet sich insbesondere bei einstelligen Füllmaschinen für niedrige Ausbringung, da einzelne Füllungen nacheinander notwendig sind und keine parallele Füllung mehrerer Behältnisse 19 erfolgen kann.

Die vorliegende Erfindung betrifft insbesondere auch die Füllgewichtsermittlung von Fertigspritzen,Vials oder Karpulen als Behältnissen 19, z.B. nach DIN-ISO 11040-4, die bereits fertig gereinigt und sterilisiert z.B. in einer Verpackung nach DIN-ISO 11040-7 einer Befüllmaschine 10 zugeführt werden. Dabei sind mehrere Behältnisse 19 in einer Kunststoffträgerplatte als Träger 18 genestet aufgenommen, was auch Nest oder Tray genannt wird, und dort in mehreren Reihen angeordnet. Auch anderweitig vorkonfigurierte Behältnisformen in Trägerplatten oder Magazinen sind dafür geeignet.

Für die IPK solcher Behältnisse 19 geht die vorliegende Erfindung von Systemen aus, bei denen die Behältnisse zum Wiegen nicht aus dem Nest genommen bzw. freigestellt werden müssen.

Die Wiegung kann vor dem Einsetzen eines Gefäßverschlusses, eines Kolbenstopfens oder dergleichen erfolgen, da diese Komponenten das Ergebnis durch ihr zusätzliches Gewicht verfälschen würden. Alternativ ist es auch möglich, direkt nach dem Befüllen das jeweilige Behältnis 19 zu verschließen. Dann muss lediglich ein neuer Tara-Wert ermittelt werden, bevor die nächste Füllung stattfindet. Damit ist das zusätzliche Gewicht des Verschlusses berücksichtigt.

Dadurch, dass der Wiegevorgang direkt unter der Füllstelle stattfindet, können auch die bekannten Verfahren zur Vermeidung von Füllgutverlust beim Füllen im Träger 18 bzw. Nest angewendet werden.

Eine erfindungsgemäße Füllmaschine 10 hat damit auch einen geringeren Platzbedarf, dies ist in den Reinräumen der Pharmaindustrie ein wesentliches Kostenthema.

Weiterhin ist es mit dem beschriebenen System einfach möglich, alle Behälter 10 oder Spritzen zu wiegen und nicht nur eine Stichprobe. Das erfolgt mit der vorher beschriebenen kurzen Wiegezeit. Man spricht in diesem Zusammenhang von einer 100%-IPK.

Ein weiterer Vorteil des beschriebenen Systems ist es, dass die Gefahr von Packmittelbeschädigungen vermieden wird, weil die Behälter 10 nicht aus dem schützenden Nest 40 abgehoben werden müssen. Die Gefahr von Glasbruch beim Entnehmen der Behälter 10 wird sowohl von Pharmaherstellern als auch von der FDA als kritisch gesehen.

Auch wenn im Zusammenhang mit der vorliegenden Erfindung von Spritzen die Rede war, sind das erfindungsgemäße Vorgehen und System auch in der Lage, gegebenenfalls durch geeignete Formatteile beliebige genestete pharmazeutische Behälter, z.B. auch Vials, Ampullen oder Karpulen in derselben Art und Weise zu handhaben und zu wiegen.

## Patentansprüche

1. Vorrichtung zum Wiegen in einem Träger (18) einer Mehrzahl genesteter pharmazeutischer Behältnisse (19), umfassend zumindest eine Wiegestation (22), wobei zumindest eine Aufnahme (20) vorgesehen ist für den Träger (18) der Behältnisse (19),
wobei die Aufnahme (20) mit der Wiegestation (22) zur Gewichtserfassung verbunden ist und **dadurch gekennzeichnet, dass** die Wiegestation (22) zumindest zwei oder mehrere Wiegezellen (24, 26) umfasst, die jeweils über zumindest einen Stößel (28) mit der Aufnahme (20) verbunden sind, vorzugsweise an gegenüberliegenden Seiten der Aufnahme (20).

2. Vorrichtung nach Anspruch 1, **dadurch gekennzeichnet, dass** beim Wiegen das Behältnis (19) in dem Träger (18) verbleibt.

3. Vorrichtung nach einem der vorhergehenden Ansprüche, **dadurch gekennzeichnet, dass** zumindest eine Füllstation (10) vorgesehen ist, die zumindest ein Behältnis (19) befüllt, wenn sich das Behältnis (19) in dem Träger (18) befindet und der Träger (18) in der Aufnahme (20) angeordnet ist.

4. Vorrichtung nach einem der vorhergehenden Ansprüche, **dadurch gekennzeichnet, dass** die Wiegestation (22) ein Gewicht vor dem Befüllen des Behältnisses (19) und/oder ein Gewicht nach dem Befüllen des Behältnisses (19) ermittelt und/oder ein Gewicht nach dem Befüllen eines weiteren Behältnisses (19) ermittelt.

5. Vorrichtung nach einem der vorhergehenden Ansprüche, **dadurch gekennzeichnet, dass** die Füllstation (10) zumindest einen Arm, insbesondere einen Roboterarm (12), umfasst, der zumindest eine Füllnadel (16) zum Befüllen eines Behältnisses (19) bewegt.

6. Verfahren zum Wiegen in einem Träger (18) einer Mehrzahl genesteter pharmazeutischer Behältnisse (19), **gekennzeichnet durch** folgende Schritte:
- der Träger (18) mit darin befindlichen zu befüllenden Behältnissen (19) wird in eine Aufnahme (20) gebracht, wobei die Aufnahme mit einer Wiegestation (22) zur Gewichtserfassung verbunden ist,
**dadurch gekennzeichnet, dass**
- die Wiegestation (22) zumindest zwei oder mehrere Wiegezellen (24, 26) umfasst, die jeweils über zumindest einen Stößel (28) mit der Aufnahme (20) verbunden sind, vorzugsweise an gegenüberliegenden Seiten der Aufnahme (20),
- wenn sich der Träger (18) in der Aufnahme (20) befindet erfasst die Wiegestation (22) das Gewicht.

7. Verfahren nach dem vorhergehenden Verfahrensanspruch, **dadurch gekennzeichnet, dass** ein Behältnis (19) befüllt wird und dass anschließend die Wiegestation (22) das Gewicht erfasst.

8. Verfahren nach einem der vorhergehenden Verfahrensansprüche, **dadurch gekennzeichnet, dass** ein weiteres Behältnis (19) befüllt wird und die Wiegestation (22) nach dem Befüllen das Gewicht erfasst.

9. Verfahren nach einem der vorhergehenden Verfahrensansprüche, **dadurch gekennzeichnet, dass** das Füllgewicht ermittelt wird aus dem nach dem Befüllen des Behältnisses (19) ermittelten Gewicht und aus dem vor dem Befüllen des Behältnisses (19) ermittelten Gewicht.

10. Verfahren nach einem der vorhergehenden Verfahrensansprüche, **dadurch gekennzeichnet, dass** das Füllgewicht eines weiteren Behältnisses (19) ermittelt wird in Abhängigkeit von einem Gewicht, das bei einem vorhergehenden befüllten Behältnis (19) ermittelt wird.

11. Verfahren nach einem der vorhergehenden Verfahrensansprüche, **dadurch gekennzeichnet, dass** nach dem Befüllen des letzten im Träger (18) angeordneten Behältnisses (19) zumindest ein Behältnis (19) verschlossen wird.

12. Verfahren nach einem der vorhergehenden Verfahrensansprüche, **dadurch gekennzeichnet, dass** vor und/oder nach dem Verschließen des Behältnisses (19) das Gewicht ermittelt wird und/oder ein weiteres Behältnis (19) befüllt und/oder verschlossen wird und das Gewicht des weiteren Behältnisses (19) ermittelt wird.

13. Verfahren nach einem der vorhergehenden Verfahrensansprüche, **dadurch gekennzeichnet, dass** die Wiegestation (22) das Gewicht erfasst, wenn sich der Träger (18) in der Aufnahme (20) befindet und sämtliche Behältnisse (19) sich im Träger (18) befinden.

## Claims

1. Device for weighing a plurality of pharmaceutical containers (19) nested in a carrier (18), comprising at least one weighing station (22), at least one
receptacle (20) being provided for the carrier (18) of the containers (19),
the receptacle (20) being connected to the weighing station (22) for weight measurement and **characterized in that** the weighing station (22) comprises at least two or more weighing cells (24, 26), each of which is connected to the receptacle (20) via at least one stem (28), preferably on opposite sides of the receptacle (20).

2. Device according to claim 1, **characterized in that** during weighing the container (19) remains in the carrier (18).

3. Device according to either of the preceding claims, **characterized in that** at least one filling station (10) is provided which fills at least one container (19) when the container (19) is located in the carrier (18) and the carrier (18) is arranged in the receptacle (20).

4. Device according to any of the preceding claims, **characterized in that** the weighing station (22) determines a weight before the container (19) is filled and/or determines a weight after the container (19) has been filled and/or determines a weight after another container (19) has been filled.

5. Device according to any of the preceding claims, **characterized in that** the filling station (10) comprises at least one arm, in particular a robot arm (12), which moves at least one filling needle (16) for filling a container (19).

6. Method for weighing a plurality of pharmaceutical containers (19) nested in a carrier (18), **characterized by** the following steps:
- the carrier (18) with the containers (19) to be filled therein is brought into a receptacle (20), the receptacle being connected to a weighing station (22) for weight measurement, **characterized in that**
- the weighing station (22) comprises at least two or more weighing cells (24, 26), each of which is connected to the receptacle (20) via at least one stem (28), preferably on opposite sides of the receptacle (20),
- when the carrier (18) is in the receptacle (20), the weighing station (22) measures the weight.

7. Method according to the preceding method claim, **characterized in that** a container (19) is filled and **in that** the weighing station (22) then measures the weight.

8. Method according to any of the preceding method claims,
**characterized in that** another container (19) is filled and the weighing station (22) measures the weight after it has been filled.

9. Method according to any of the preceding method claims,
**characterized in that** the filling weight is determined from the weight determined after the container (19) has been filled and from the weight determined before the container (19) is filled.

10. Method according to any of the preceding method claims,
**characterized in that** the filling weight of a further container (19) is determined on the basis of a weight which is determined in a previously filled container (19).

11. Method according to any of the preceding method claims,
**characterized in that** after the last container (19) arranged in the carrier (18) has been filled, at least one container (19) is closed.

12. Method according to any of the preceding method claims,
**characterized in that** before and/or after the container (19) has been closed, the weight is determined and/or a further container (19) is filled and/or closed and the weight of the further container (19) is determined.

13. Method according to any of the preceding method claims,
**characterized in that** the weighing station (22) measures the weight when the carrier (18) is in the receptacle (20) and all containers (19) are in the carrier (18).

## Revendications

1. Dispositif permettant de peser une pluralité de contenants (19) pharmaceutiques emboîtés dans un support (18), comprenant au moins une station de pesée (22),
dans lequel au moins un logement (20) est prévu pour le support (18) des contenants (19),
dans lequel le logement (20) est relié à la station de pesée (22) permettant la détection du poids et **caractérisé en ce que** la station de pesée (22) comprend au moins deux cellules de pesée (24, 26) ou plus qui sont reliées au logement (20) respectivement par l'intermédiaire d'au moins une tige-poussoir (28), de préférence sur des côtés opposés du logement (20).

2. Dispositif selon la revendication 1, **caractérisé en ce que,** lors de la pesée, le contenant (19) demeure dans le support (18).

3. Dispositif selon l'une des revendications précédentes,
**caractérisé en ce qu'**au moins une station de remplissage (10) est prévue, laquelle remplit au moins un contenant (19) lorsque le contenant (19) se trouve dans le support (18) et que le support (18) est agencé dans le logement (20).

4. Dispositif selon l'une des revendications précédentes,
**caractérisé en ce que** la station de pesée (22) détermine un poids avant le remplissage du contenant (19) et/ou un poids après le remplissage du contenant (19) et/ou détermine un poids après le remplissage d'un autre contenant (19).

5. Dispositif selon l'une des revendications précédentes,
**caractérisé en ce que** la station de remplissage (10) comprend au moins un bras, en particulier un bras de robot (12), qui déplace au moins une aiguille de remplissage (16) permettant de remplir un contenant (19).

6. Procédé permettant de peser une pluralité de contenants (19) pharmaceutiques emboîtés dans un support (18), **caractérisé par** les étapes suivantes :
- le support (18), conjointement avec des contenants (19) à remplir se trouvant dans celui-ci, est amené dans un logement (20), dans lequel le logement est relié à une station de pesée (22) permettant la détection du poids, **caractérisé en ce que**
- la station de pesée (22) comprend au moins deux cellules de pesée (24, 26) ou plus qui sont reliées au logement (20) respectivement par l'intermédiaire d'au moins une tige-poussoir (28), de préférence sur des côtés opposés du logement (20),
- lorsque le support (18) se trouve dans le logement (20), la station de pesée (22) détecte le poids.

7. Procédé selon la revendication de procédé précédente,
**caractérisé en ce qu'**un contenant (19) est rempli puis la station de pesée (22) détecte le poids.

8. Procédé selon l'une des revendications de procédé précédentes,
**caractérisé en ce qu'**un autre contenant (19) est rempli et la station de pesée (22) détecte le poids après le remplissage.

9. Procédé selon l'une des revendications de procédé précédentes,
**caractérisé en ce que** le poids de remplissage est déterminé à partir du poids déterminé après le remplissage du contenant (19) et à partir du poids déterminé avant le remplissage du contenant (19).

10. Procédé selon l'une des revendications de procédé précédentes,
**caractérisé en ce que** le poids de remplissage d'un autre contenant (19) est déterminé en fonction d'un poids qui est déterminé pour un contenant (19) rempli précédent.

11. Procédé selon l'une des revendications de procédé précédentes,
**caractérisé en ce qu'**après le remplissage du dernier contenant (19) agencé dans le support (18), au moins un contenant (19) est fermé.

12. Procédé selon l'une des revendications de procédé précédentes, **caractérisé en ce qu'**avant et/ou après la fermeture du contenant (19), le poids est déterminé et/ou un autre contenant (19) est rempli et/ou fermé et le poids de l'autre contenant (19) est déterminé.

13. Procédé selon l'une des revendications de procédé précédentes, **caractérisé en ce que** la station de pesée (22) détecte le poids lorsque le support (18) se trouve dans le logement (20) et que tous les contenants (19) se trouvent dans le support (18).
